# EUROPÄISCHE PATENTSCHRIFT

(11) **EP 3 456 923 B1**
(45) Veröffentlichungstag und Bekanntmachung des Hinweises auf die Patenterteilung: **18.11.2020**
(21) Anmeldenummer: 18189446.0
(22) Anmeldetag: 17.08.2018
(51) Int. Cl.: F01D 5/18

(54) **SCHAUFEL EINER STRÖMUNGSMASCHINE MIT KÜHLKANAL UND DARIN ANGEORDNETEM VERDRÄNGUNGSKÖRPER SOWIE VERFAHREN ZUR HERSTELLUNG**
BLADE OF A TURBOMACHINE HAVING COOLING PASSAGE AND DISPLACEMENT BODY ARRANGED THEREIN AND METHOD FOR PRODUCING THE SAME
AUBE D'UNE TURBOMACHINE POURVUE DE CANAL DE REFROIDISSEMENT ET CORPS DE REFOULEMENT AGENCÉ DANS UNE TELLE AUBE D'UNE TURBOMACHINE AINSI QUE PROCÉDÉ DE FABRICATION

(30) Priorität: 11.09.2017 DE 102017215940
(43) Veröffentlichungstag der Anmeldung: 20.03.2019
(73) Patentinhaber: MTU Aero Engines AG, 80995 München (DE)
(72) Erfinder: Scharl, Richard, 85757 Karlsfeld (DE); Casper, Johannes, 85737 München (DE); Ladewig, Alexander, 83707 Bad Wiessee (DE); Liebl, Christian, 85461 Bockhorn (DE); Schlothauer, Steffen, 85253 Erdweg (DE); Semmler, Klaus, 85221 Dachau (DE)

(56) Entgegenhaltungen:
- WO-A1-2017/009051
- WO-A1-2017/121689
- WO-A2-2015/076909
- DE-A1- 10 004 128
- US-A1- 2016 222 796
- US-B1- 9 611 745

## Beschreibung

### HINTERGRUND DER ERFINDUNG

### GEBIET DER ERFINDUNG

Die vorliegende Erfindung betrifft eine Schaufel einer Strömungsmaschine, wie beispielsweise einer stationären Gasturbine oder eines Flugtriebwerks, und insbesondere eine Turbinenschaufel, vorzugsweise eine Turbinenschaufel einer Hochdruckturbine, wobei die Schaufel mindestens einen Kühlkanal im Inneren der Schaufel zur Kühlung der Schaufel mit einem durch den Kühlkanal strömenden Fluid aufweist. Darüber hinaus betrifft die vorliegende Erfindung ein Verfahren zur Herstellung einer derartigen Schaufel.

### STAND DER TECHNIK

Bei Strömungsmaschinen, wie stationären Gasturbinen oder Flugtriebwerken, ist es bekannt Schaufeln, insbesondere Schaufeln für den Bereich der Hochdruckturbine, mit Kühlkanälen zu versehen, um ein Kühlfluid durch den mindestens einen Kühlkanal der Schaufel leiten zu können, um dadurch die Temperaturbelastung der Schaufel zu erniedrigen. Auf diese Weise kann eine möglichst hohe Betriebstemperatur der Strömungsmaschine für eine Schaufel aus einem gegebenen Werkstoff realisiert werden oder es stehen für eine bestimmte Betriebstemperatur der Strömungsmaschine mehr Alternativen eines möglichen Werkstoffs für die Fertigung der Schaufel zur Verfügung, ohne dass es beim Betrieb zu einer Schädigung der Schaufel bzw. des Werkstoffs der Schaufel auf Grund der Temperaturbelastung kommt.

Beispiele für derartige Turbinenschaufeln sind beispielsweise in der US 2016 / 0312617 A1, US 2016 / 222 796 A1, WO 2017 / 009 051 A1, US 9 611 745 B1, WO 2015 / 076 909 A2, WO 2017 / 121 689 A1, DE 100 04 128 A1 oder der DE 10 2015 213 090 A1 beschrieben. Obwohl mit den bekannten Turbinenschaufeln bereits hohe Betriebstemperaturen der Strömungsmaschinen verwirklicht werden können, besteht weiterhin Bedarf die Kühlung von Schaufeln in Strömungsmaschinen zu verbessern, um entweder die Betriebstemperatur der Strömungsmaschinen weiter erhöhen zu können oder andere Materialien für die Schaufeln einsetzen zu können. Außerdem ist es für einen effizienten Betrieb der Strömungsmaschinen vorteilhaft, wenn ein geringerer Bedarf an Kühlfluid, wie beispielsweise Kühlluft, gegeben ist.

Die beschriebenen Aspekte der Bedeutung der Kühlung von Schaufeln gelten umso mehr, wenn Schaufeln integral mit einer Scheibe als sogenannte Blisk ausgebildet werden, da dies die Materialauswahl für die Schaufeln begrenzt und der Kühlung der Schaufel bzw. des Schaufelblatts entsprechend größere Bedeutung zukommt.

### OFFENBARUNG DER ERFINDUNG

### AUFGABE DER ERFINDUNG

Es ist deshalb Aufgabe der vorliegenden Erfindung eine Schaufel für eine Strömungsmaschine bereitzustellen, die eine bessere und insbesondere effizientere Kühlung der Schaufel bzw. des Schaufelblatts während des Betriebs der Strömungsmaschine ermöglicht. Gleichzeitig soll die Schaufel zuverlässig betreibbar und einfach herstellbar sein.

### TECHNISCHE LÖSUNG

Diese Aufgabe wird gelöst durch eine Schaufel mit den Merkmalen des Anspruchs 1 sowie einem Verfahren zur Herstellung einer Schaufel einer Strömungsmaschine mit den Merkmalen des Anspruchs 12. Vorteilhafte Ausgestaltungen sind Gegenstand der abhängigen Ansprüche.

Gemäß der Erfindung wird vorgeschlagen, bei einer Schaufel für eine Strömungsmaschine, die mindestens einen Kühlkanal im Inneren der Schaufel zur Kühlung der Schaufel mit einem durch den Kühlkanal strömenden Fluid aufweist, mindestens einen Verdrängungskörper im Kühlkanal anzuordnen, sodass sich im Bereich des oder der Verdrängungskörper ein ring - oder schlauchförmiger Spalt zwischen dem Verdrängungskörper und der Wand des Kühlkanals ergibt, der für den Durchfluss des Fluids zur Verfügung steht. Dadurch wird erreicht, dass das Kühlfluid besser in Kontakt mit der zu kühlenden Wand des Kühlkanals bzw. dem angrenzenden Material der Schaufel gelangt, welches durch das Kühlfluid, wie beispielsweise Kühlluft, gekühlt werden soll. Dadurch kann die Wärmeübertragung auf das Kühlfluid verbessert werden und es findet eine effektivere und effizientere Kühlung der Schaufel statt, sodass die Temperaturbelastung der Schaufel und / oder der Verbrauch an Kühlfluid reduziert werden können.

Alternativ zur Ausbildung eines ring - oder schlauchförmigen Spalts zwischen Verdrängungskörper und Wand des Kühlkanals können der oder die Verdrängungskörper auch so in dem Kühlkanal ausgebildet werden, dass mindestens zwei oder mehr Teilkanäle gebildet werden, die ebenfalls bewirken, dass das durch den Kühlkanal strömende Kühlfluid effizient an den zu kühlenden Bereichen der Schaufel bereitgestellt wird.

Der Verdrängungskörper kann bzw. mehrere Verdrängungskörper können auf unterschiedliche Art und Weise im Kühlkanal einer Schaufel einer Strömungsmaschine angeordnet werden, um einen besseren Wärmeübergang von der Wand des Kühlkanals auf das durchströmende Kühlfluid zu erreichen.

Beispielsweise kann der mindestens eine Verdrängungskörper im Bereich des axialen und / oder radialen Zentrums des Kühlkanals angeordnet sein. Unter der axialen Richtung wird die Längserstreckung des Kühlkanals entlang der Fließrichtung des Kühlfluids verstanden, während die radiale Richtung eine Richtung quer zur axialen Richtung bzw. Längsrichtung des Kühlkanals darstellt. Entsprechend kann also der mindestens eine Verdrängungskörper mittig im Kühlkanal angeordnet sein, und zwar in Bezug auf die Längsrichtung bzw. axiale Richtung und / oder in Bezug auf die Mittenachse des Kühlkanals, also die radiale Richtung.

Der Verdrängungskörper kann sich entlang der Mittelachse des Kühlkanals, insbesondere koaxial zur Mittelachse des Kühlkanals erstrecken. Dadurch ergibt sich eine gleichmäßige Verteilung des durchströmenden Kühlfluids entlang des Umfangs des Kühlkanals.

Die Spaltbreite des Spalts, der sich zwischen dem Verdrängungskörper und der Wand des Kühlkanals ausbildet, bzw. der maximale Durchmesser bzw. der Strömungsquerschnitt von einem durch den Verdrängungskörper ausgebildeten Teilkanal kann entlang der Längsachse des Kühlkanals konstant sein oder entlang der Längsachse des Kühlkanals variieren. Darüber hinaus sind auch Kombinationen denkbar, sodass in Teilbereichen die Spaltbreite des Spalts bzw. der maximale Durchmesser oder der Strömungsquerschnitt eines Teilkanals unterschiedlich sein kann, aber in anderen Teilbereichen die Spaltbreite des Spalts bzw. der maximale Durchmesser oder der Strömungsquerschnitt des Teilkanals über der Längsachse konstant bleibt. Vorzugsweise kann die Spaltbreite des Spalts bzw. der maximale Durchmesser oder der Strömungsquerschnitt eines Teilkanals über der gesamten Länge des Kühlkanals oder mindestens über einen großen Teilbereich des Kühlkanals, beispielsweise über mindestens 90 % des Kühlkanals, konstant bleiben.

Neben einer Variation der Spaltbreite des Spalts zwischen Verdrängungskörper und Wand des Kühlkanals entlang der Längsachse des Kühlkanals kann die Spaltbreite auch entlang des Umfangs des Kühlkanals um die Längsachse variieren oder gleichbleibend konstant ausgebildet sein. Eine Veränderung der Spaltbreite entlang des Umfangs des Kühlkanals kann verwendet werden, um in bestimmten Bereichen des Kühlkanals, beispielsweise abhängig von der Nähe zu der Oberfläche des Schaufelblatts, mehr oder weniger Kühlfluid entlang der Wand des Kühlkanals vorbeiströmen zu lassen.

Der Verdrängungskörper kann so ausgebildet und im Kühlkanal angeordnet sein, dass der Strömungsquerschnitt des Kühlkanals im Bereich des Verdrängungskörpers verringert ist.

Der Verdrängungskörper kann weiterhin durch eine Waben -, Matrix - oder Fachwerkstruktur gebildet sein, sodass sowohl der Materialeinsatz als auch das Gewicht der Schaufel niedrig gehalten werden können. Bei der Ausbildung des Verdrängungskörpers in einer Waben -, Matrix - oder Fachwerkstruktur können die Hohlräume der Waben -, Matrix - oder Fachwerkstruktur mit einem Füllmaterial gefüllt werden, welches beispielsweise eine niedrige Dichte aufweist.

Der Verdrängungskörper ist mit einer geschlossenen Hülle versehen, beispielsweise mit einer Metallhülle, um das Eindringen von Kühlfluid zu verhindern. Die geschlossene Hülle kann insbesondere nach dem Befüllen der Hohlräume mit Füllmaterial oder nach dem Entleeren der Hohlräume von Fertigungsmaterial komplett dicht verschlossen werden.

Die Querschnittsformen des Kühlkanals und / oder eines der Teilkanäle und / oder des Verdrängungskörpers können in unterschiedlicher Weise verwirklicht werden, beispielsweise als runde, kreisrunde, ovale, eckige, viereckige, sechseckige Formen oder beliebige Freiformen. Hierbei können die Querschnittsformen des Kühlkanals und des Verdrängungskörpers gleichartig oder verschieden sein.

Die Anordnung eines Verdrängungskörpers in einem Kühlkanal kann sich dadurch auszeichnen, dass für sämtliche Kühlfluidpfade durch den Kühlkanal, also für einen ringförmigen oder schlauchförmigen Spalt und / oder mehrere Teilkanäle, ein gemeinsamer Kühleinlass vorgesehen ist. Entsprechend können bei der Ausbildung von mehreren Teilkanälen diese in einen gemeinsamen Kühlkanal münden.

Bei der Ausbildung von Teilkanälen kann der mindestens eine Verdrängungskörper so geformt und / oder so im Kühlkanal angeordnet werden, dass die Teilkanäle an den Seiten des Kühlkanals ausgebildet werden, die näher an einer Oberfläche der Schaufel angeordnet sind, als eine der anderen Seiten des Kühlkanals. Insbesondere können die Teilkanälen so angeordnet sein, dass sie zumindest mit einem größeren Flächenanteil an der oder den Seiten des Kühlkanals angeordnet sind, die näher an einer Oberfläche der Schaufel liegen als die Seiten des Kühlkanals ohne oder mit einem geringeren Oberflächenanteil eines der Teilkanäle.

Der Kühlkanal und / oder die Teilkanäle des Kühlkanals können so ausgebildet sein, dass der maximale Durchmesser des Kühlkanals oder eines Teilkanals kleiner ist als die Längserstreckung des Kühlkanals und / oder des Teilkanals.

Der Kühlkanal kann sich insbesondere mäanderförmig durch die Schaufel erstrecken, sodass große Bereiche der Schaufel durch das durch den Kühlkanal strömende Kühlfluid gekühlt werden können.

Die Herstellung einer entsprechenden Schaufel kann insbesondere durch generative bzw. additive Herstellverfahren erfolgen, bei denen die Schaufel schichtweise aus einem Pulvermaterial aufgebaut wird. Auf diese Weise ist es in einfacher Weise möglich den Verdrängungskörper in einem Kühlkanal auszubilden.

Vorzugsweise kann als generatives oder additives Herstellverfahren selektives Laserstrahlschmelzen oder selektives Elektronenstrahlschmelzen eingesetzt werden.

### KURZBESCHREIBUNG DER FIGUREN

Die beigefügten Zeichnungen zeigen in rein schematischer Weise in
- Figur 1: eine perspektivische Darstellung einer erfindungsgemäßen Turbinenschaufel,
- Figur 2: einen Längsschnitt durch die Turbinenschaufel aus Figur 1 mit einer Schnittansicht gemäß der Pfeile A,
- Figur 3: einen Querschnitt durch die Turbinenschaufel aus Figur 1 mit einer Schnittansicht gemäß der Pfeile B, und in
- Figur 4: eine weitere Ausführungsform einer Turbinenschaufel gemäß der Darstellung der Figur 3

### AUSFÜHRUNGSBEISPIELE

Weitere Vorteile, Kennzeichen und Merkmale der vorliegenden Erfindung werden bei der nachfolgenden detaillierten Beschreibung der Ausführungsbeispiele ersichtlich. Allerdings ist die Erfindung nicht auf diese Ausführungsbeispiele beschränkt.

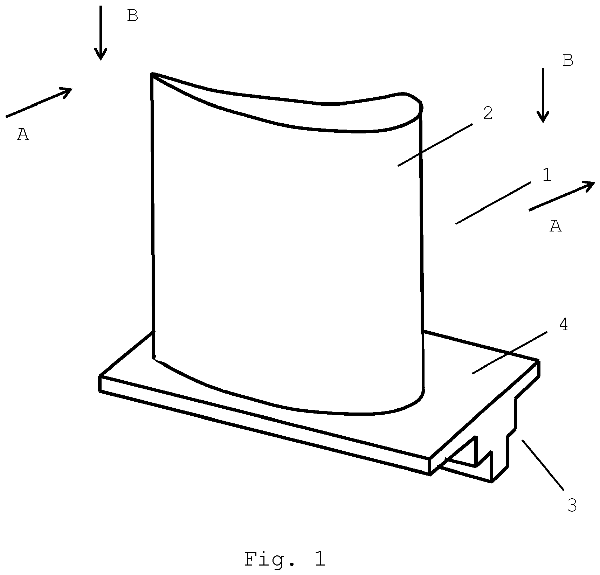

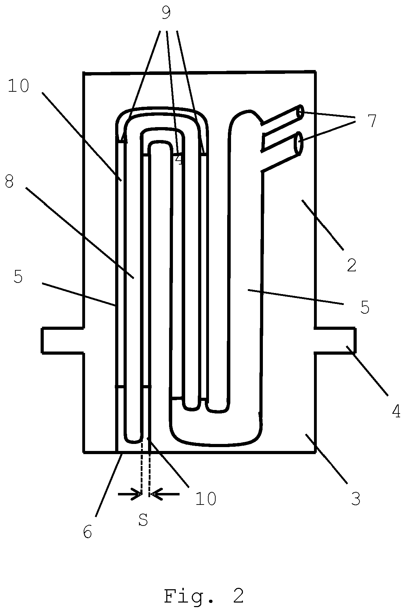

Die Figur 1 zeigt eine perspektivische Darstellung einer Turbinenschaufel 1, bei der die Erfindung verwirklicht ist. Die Turbinenschaufel 1, die beispielsweise im Hochdruckturbinenbereich einer Strömungsmaschine eingesetzt werden kann, umfasst ein Schaufelblatt 2 sowie einen Schaufelfuß 3, wobei zwischen Schaufelblatt 2 und Schaufelfuß 3 ein Deckblatt 4 ausgebildet ist. Wie sich aus der Schnittansicht der Figur 2 ergibt, ist im Inneren der Turbinenschaufel 1 ein Kühlkanal 5 ausgebildet, der einen Kühlkanaleinlass 6 im Bereich des Schaufelfußes 3 und zwei Kühlkanalkanalauslässe 7 im Bereich der Schaufelspitze des Schaufelblatts 2 aufweist.

Der Kühlkanal 5 verläuft mäanderförmig zunächst vom Kühlkanaleinlass 6 im Bereich des Schaufelfußes 3 an das obere Ende des Schaufelblatts 2 und nach einer 180° - Umlenkung vom oberen Ende des Schaufelblatts 2 wieder zurück zum Schaufelfuß 3 wo nach einer weiteren 180° - Umlenkung der Kühlkanal 5 wiederum in Richtung des oberen Endes des Schaufelblatts 2 verläuft. Im Bereich des oberen Endes des Schaufelblatts 2 an der Schaufelspitze weist der Kühlkanal 5 mehrere Kühlkanalauslässe 7 auf, durch die ein Fluid, das zur Kühlung der Turbinenschaufel 1 dient, wie beispielsweise Kühlluft, den Kühlkanal 5 wieder verlassen kann.

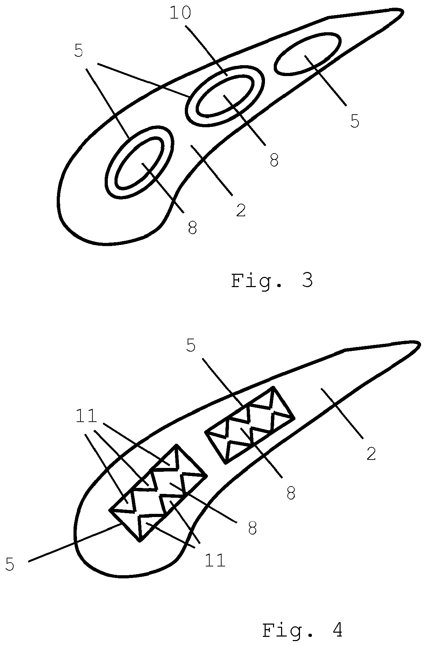

Um zu erreichen, dass das Kühlfluid bzw. die Kühlluft möglichst an der den Kühlkanal 5 radial begrenzenden Wand des Kühlkanals 5 entlang streicht, um dort eine entsprechende Wärmeübertragung mit dem im Betrieb erhitzten Material des Schaufelblatts 2 zu ermöglichen, ist im Kühlkanal 5 ein Verdrängungskörper 8 vorgesehen, der sich in dem gezeigten Ausführungsbeispiel der Figuren 2 und 3 mittig entlang der Längsachse des Kühlkanals 5 erstreckt.

Wie der Figur 2 zu entnehmen ist, ist der Verdrängungskörper 8 nicht über die gesamte Länge des Kühlkanals 5 vorgesehen, sondern lediglich in einem Teilabschnitt des Kühlkanals 5, und zwar in dem Teilabschnitt, in dem der Kühlkanal 5 vom Schaufelfuß 3 zum oberen Ende des Schaufelblatts 2 an der Schaufelspitze und wieder zurück zum Schaufelfuß 3 verläuft. Selbstverständlich ist es jedoch auch möglich, den Verdrängungskörper 8 über weitere Bereiche entlang der Längsachse des Kühlkanals 5 vorzusehen oder mehrere Verdrängungskörper 8 hintereinander entlang des Kühlkanals 5 anzuordnen.

Der Verdrängungskörper 8, der bei dem gezeigten Ausführungsbeispiel eine zylinderförmige Grundform mit einem ovalen Querschnitt (siehe Figur 3) aufweist und entsprechend der 180° - Umlenkung des Kühlkanals 5 im Bereich der Schaufelspitze ebenfalls eine U - Form besitzt, ist über Haltestege 9 beabstandet zur radialen Begrenzungswand des Kühlkanals 5 in der Mitte des Kühlkanals 5 angeordnet. Die Haltestege 9 können entlang des Umfangs des Verdrängungskörpers 8 beabstandet zueinander sowie beabstandet zueinander entlang der Längsrichtung des Verdrängungskörpers 8 angeordnet sein.

Der Verdrängungskörper 8 ist so beabstandet zur Wand des Kühlkanals 5 angeordnet, dass sich ein Ringspalt 10 ergibt, der den Verdrängungskörper 8 umgibt und zwischen Verdrängungskörper 8 und Wand des Kühlkanals 5 ausgebildet ist. Der Ringspalt 10 erstreckt sich schlauchförmig entlang der Längsrichtung des Verdrängungskörpers 8 und des Kühlkanals 5. Das Kühlfluid, das den Kühlkanal durchfließt, kann aufgrund des Verdrängungskörpers 8 lediglich im Bereich des Ringspalts 10 durch den Kühlkanal 5 fließen, sodass eine großer Anteil des durchströmenden Kühlfluids in unmittelbarer Nähe zur Wand des Kühlkanals 5 fließt und dort einen entsprechenden Wärmeübergang bewirken kann.

Die Figur 3 zeigt in einer Querschnittsansicht die Anordnung des im Querschnitt oval geformten Verdrängungskörpers 8 in den ersten beiden Teilabschnitten des Kühlkanals 5, die sich vom vom Schaufelfuß 3 zur Schaufelspitze des Schaufelblatts 2 und zurück erstrecken. In der Darstellung der Figur 3 ist zu erkennen, dass auch der Kühlkanal 5 im Querschnitt eine ovale Form aufweist. Allerdings ist es selbstverständlich möglich, dass sowohl der Kühlkanal 5 als auch der Verdrängungskörper 8 andere Querschnittsformen aufweisen, beispielsweise eine kreisrunde Querschnittsform, eckige, insbesondere viereckige, rechteckige, quadratische, mehreckige oder beliebig geformte Querschnittsformen. Dabei kann die Querschnittsform des Verdrängungskörpers 8 der Querschnittsform des Kühlkanals 5 entsprechen oder die Querschnittsformen von Kühlkanal 5 und Verdrängungskörper 8 können unterschiedlich sein.

Bei dem gezeigten Ausführungsbeispiel der Figur 3 ist umlaufend um den Verdrängungskörper 8 der Ringspalt 10 gleichmäßig mit einer konstanten Ringspaltbreite S ausgebildet. Allerdings können der Verdrängungskörper 8 und der Kühlkanal 5 auch so geformt sein und / oder der Verdrängungskörper 8 in dem Kühlkanal 5 so angeordnet sein, dass umlaufend um den Verdrängungskörper 8 die Ringspaltbreite S unterschiedlich ist. Beispielsweise kann der Verdrängungskörper 8 nicht, wie in dem gezeigten Ausführungsbeispiel der Figur 3, koaxial mit seiner zentralen Längsachse zur zentralen Längsachse des Kühlkanals 5 sondern exzentrisch zur Mittenachse des Kühlkanals 5 angeordnet sein.

Darüber hinaus ist es auch möglich, dass die Spaltbreite S des Spalts 10 zwischen dem Verdrängungskörper 8 und der Wand des Kühlkanals 5 entlang der Längsachse des Kühlkanals 5 variiert. In der Figur 2 ist gezeigt, dass die Spaltbreite S in den Teilabschnitten die sich geradlinig vom Schaufelfuß 3 zur Schaufelspitze erstrecken, konstant gehalten ist. Im Bereich der 180° - Umlenkung des Kühlkanals 5 im oberen Bereich des Schaufelblatts 2 an der Schaufelspitze ist die Spaltbreite S jedoch teilweise unterschiedlich zur Spaltbreite S in den geraden Teilabschnitten des Kühlkanals 5.

Die Figur 4 zeigt in einer Querschnittsansicht vergleichbar der Querschnittsansicht der Figur 3 eine weitere Ausführungsform einer erfindungsgemäßen Turbinenschaufel 1, bei der der Kühlkanal 5 eine rechteckige Querschnittsform aufweist. In dem Kühlkanal 5 der Ausführungsform der Figur 4 ist ein Verdrängungskörper 8 eingesetzt, der im Querschnitt in einer mehreckigen Form mit mehreren dreiecksförmigen Einbuchtungen entlang der Längsseiten einer rechteckigen Grundform ausgebildet ist. Durch die dreiecksförmigen Einbuchtungen werden bei der Anordnung des Verdrängungskörpers 8 in dem Kühlkanal 5 mehrere Teilkanäle 11 an den Längsseiten der rechteckigen Querschnittsform des Kühlkanals 5 ausgebildet, die es ermöglichen, dass das durch den Kühlkanal 5 strömende Kühlfluid im Wesentlichen an den Oberflächen der Wand des Kühlkanals 5 entlang streicht, welche benachbart zu den Außenseiten des Schaufelblatts 2 angeordnet sind, also im gezeigten Ausführungsbeispiel an den Längsseiten des im Querschnitt rechteckigen Kühlkanals 5. Damit wird das den Kühlkanal durchströmende Kühlfluid auf die Wandbereiche des Kühlkanals 5 konzentriert, die benachbart zu den temperaturbelasteten Außenseiten des Schaufelblatts 2 liegen, also den Längsseiten des rechteckigen Kühlkanals. Dies ermöglicht einen besonders effizienten Einsatz des Kühlfluids.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden können, ohne dass der Schutzbereich der beigefügten Ansprüche verlassen wird. Insbesondere schließt die vorliegende Offenbarung sämtliche Kombinationen der in den verschiedenen Ausführungsbeispielen gezeigten Einzelmerkmale mit ein, sodass einzelne Merkmale, die nur in Zusammenhang mit einem Ausführungsbeispiel beschrieben sind, auch bei anderen Ausführungsbeispielen oder nicht explizit dargestellten Kombinationen von Einzelmerkmalen eingesetzt werden können.

### BEZUGSZEICHENLISTE

- 1: Turbinenschaufel
- 2: Schaufelblatt
- 3: Schaufelfuß
- 4: Deckblatt
- 5: Kühlkanal
- 6: Kühlkanaleinlass
- 7: Kühlkanalauslass
- 8: Verdrängungskörper
- 9: Haltesteg
- 10: Spalt
- 11: Teilkanal
- S: Spaltbreite

## Patentansprüche

1. Schaufel einer Strömungsmaschine mit mindestens einem Kühlkanal (5) im Inneren der Schaufel zur Kühlung der Schaufel (1) mit einem durch den Kühlkanal strömendem Fluid, wobei der Kühlkanal mindestens einen Einlass (6) und mindestens einen Auslass (7) aufweist, zwischen denen sich der Kühlkanal entlang seiner Längsachse erstreckt, und wobei der Kühlkanal durch mindestens eine Wand radial begrenzt ist,
**dadurch gekennzeichnet, dass**
im Kühlkanal mindestens ein Verdrängungskörper (8) angeordnet ist, der mit einer geschlossenen Hülle versehen ist und sich nur über einen Teilbereich entlang der Längsachse des Kühlkanals (5) erstreckt, sodass sich im Bereich des oder der Verdrängungskörper (8) ein ring - oder schlauchförmiger Spalt (10) zwischen Verdrängungskörper (8) und Wand des Kühlkanals (5) ergibt, der für den Durchfluss des Fluids zur Verfügung steht, oder im Bereich des oder der Verdrängungskörper mindestens zwei oder mehrere Teilkanäle (11) gebildet sind.

2. Schaufel nach Anspruch 1,
**dadurch gekennzeichnet, dass**
der mindestens eine Verdrängungskörper (8) im Bereich des axialen und / oder radialen Zentrums des Kühlkanals (8) entlang der Mittenachse des Kühlkanals, insbesondere koaxial zum Kühlkanal (5) angeordnet ist.

3. Schaufel nach einem der vorhergehenden Ansprüche,
**dadurch gekennzeichnet, dass**
die Spaltbreite des Spalts (10) zwischen Verdrängungskörper (8) und Wand des Kühlkanals (5) oder der maximale Durchmesser von einem oder jedem der Teilkanäle (11) entlang der Längsachse des Kühlkanals variiert oder zumindest in Teilbereichen, vorzugsweise über die gesamte Länge des Verdrängungskörpers (8) oder mindestens 90 % der Länge des Verdrängungskörpers (8) gleichbleibend ist.

4. Schaufel nach einem der vorhergehenden Ansprüche,
**dadurch gekennzeichnet, dass**
die Spaltbreite des Spalts (10) zwischen Verdrängungskörper (8) und Wand des Kühlkanals (5) entlang des Umfangs des Kühlkanals (5) variiert oder gleichbleibend ist.

5. Schaufel nach einem der vorhergehenden Ansprüche,
**dadurch gekennzeichnet, dass**
der Verdrängungskörper (8) den Strömungsquerschnitt des Kühlkanals (5) verringert.

6. Schaufel nach einem der vorhergehenden Ansprüche,
**dadurch gekennzeichnet, dass**
der Verdrängungskörper (8) eine Waben -, Matrix - oder Fachwerkstruktur umfasst.

7. Schaufel nach einem der vorhergehenden Ansprüche,
**dadurch gekennzeichnet, dass**
im Querschnitt eine Form des Umfangs des Kühlkanals (5) und / oder des Teilkanals (11) und / oder des Verdrängungskörpers (8) ausgewählt ist aus der Gruppe, die eine runde, kreisrunde, ovale, eckige, viereckige, sechseckige Form und beliebige Freiformen umfasst.

8. Schaufel nach einem der vorhergehenden Ansprüche,
**dadurch gekennzeichnet, dass**
mehrere Teilkanäle (11) in einen gemeinsamen Kühlkanal münden und / oder einen gemeinsamen Kühlkanaleinlass (6) umfassen.

9. Schaufel nach einem der vorhergehenden Ansprüche,
**dadurch gekennzeichnet, dass**
der oder die Verdrängungskörper (8) so im Kühlkanal (5) angeordnet sind, dass die Teilkanäle (11) zumindest mit einem größeren Flächenanteil an der oder den Seiten des Kühlkanals ausgebildet sind, die näher an einer Oberfläche der Schaufel angeordnet sind als die Seite ohne oder mit geringerem Oberflächenanteil des Teilkanals.

10. Schaufel nach einem der vorhergehenden Ansprüche,
**dadurch gekennzeichnet, dass**
die Längserstreckung des Kühlkanals (5) und / oder der Teilkanäle (11) größer ist als der maximale Durchmesser des Kühlkanals (5) oder von einem oder jedem der Teilkanäle (11).

11. Schaufel nach einem der vorhergehenden Ansprüche,
**dadurch gekennzeichnet, dass**
der Kühlkanal (5) sich mäanderförmig durch die Schaufel erstreckt.

12. Verfahren zur Herstellung einer Schaufel einer Strömungsmaschine nach einem der vorhergehenden Ansprüche, wobei die Schaufel durch ein generatives Verfahren hergestellt wird.

13. Verfahren nach Anspruch 12,
**dadurch gekennzeichnet, dass**
das generative Verfahren selektives Elektronenstrahl - oder Laserstrahlschmelzen ist.

## Claims

1. Blade of a turbomachine, comprising at least one cooling channel (5) inside the blade for cooling the blade (1) by means of a fluid flowing through the cooling channel, the cooling channel having at least one inlet (6) and at least one outlet (7) between which the cooling channel extends along its longitudinal axis, and the cooling channel being radially delimited by at least one wall, **characterized in that** at least one displacement body (8) is arranged in the cooling channel, which body is provided with a closed shell and extends only over a sub-region along the longitudinal axis of the cooling channel (5), such that there is an annular or tubular gap (10) in the region of the displacement body or bodies (8) between the displacement body (8) and the wall of the cooling channel (5), which gap is available for the fluid to flow through, or at least two or more sub-channels (11) are formed in the region of the displacement body or bodies.

2. Blade according to claim 1, **characterized in that** the at least one displacement body (8) is arranged in the region of the axial and/or radial center of the cooling channel (8) along the central axis of the cooling channel, in particular coaxially to the cooling channel (5).

3. Blade according to either of the preceding claims, **characterized in that** the gap width of the gap (10) between the displacement body (8) and the wall of the cooling channel (5) or the maximum diameter of one or each of the sub-channels (11) varies along the longitudinal axis of the cooling channel or is constant at least in sub-regions, preferably over the entire length of the displacement body (8) or at least 90% of the length of the displacement body (8).

4. Blade according to any of the preceding claims, **characterized in that** the gap width of the gap (10) between the displacement body (8) and the wall of the cooling channel (5) varies or is constant along the circumference of the cooling channel (5).

5. Blade according to any of the preceding claims, **characterized in that** the displacement body (8) reduces the flow cross section of the cooling channel (5).

6. Blade according to any of the preceding claims, **characterized in that** the displacement body (8) comprises a honeycomb structure, a matrix structure or a lattice structure.

7. Blade according to any of the preceding claims, **characterized in that**, in cross section, a shape of the circumference of the cooling channel (5) and/or of the sub-channel (11) and/or of the displacement body (8) is selected from the group comprising a round, circular, oval, square, tetragonal or hexagonal shape and any free shapes.

8. Blade according to any of the preceding claims, **characterized in that** a plurality of sub-channels (11) open into a common cooling channel and/or comprise a common cooling channel inlet (6).

9. Blade according to any of the preceding claims, **characterized in that** the displacement body or bodies (8) are arranged in the cooling channel (5) in such a way that the sub-channels (11) are formed at least so as to have a greater surface area proportion on the side or sides of the cooling channel that are arranged closer to a surface of the blade than the side without or with a smaller surface proportion of the sub-channel.

10. Blade according to any of the preceding claims, **characterized in that** the longitudinal extension of the cooling channel (5) and/or the sub-channels (11) is greater than the maximum diameter of the cooling channel (5) or of one or each of the sub-channels (11).

11. Blade according to any of the preceding claims, **characterized in that** the cooling channel (5) extends through the blade in a meandering manner.

12. Method for producing a blade of a turbomachine according to any of the preceding claims, wherein the blade is produced by an additive method.

13. Method according to claim 12, **characterized in that** the additive method is selective electron beam or laser beam melting.

## Revendications

1. Aube d'une turbomachine pourvue d'au moins un canal de refroidissement (5) à l'intérieur de l'aube pour refroidir l'aube (1) avec un fluide circulant à travers le canal de refroidissement, le canal de refroidissement comportant au moins une entrée (6) et au moins une sortie (7) entre lesquelles le canal de refroidissement s'étend le long de son axe longitudinal, et le canal de refroidissement étant radialement délimité par au moins une paroi,
**caractérisée**
**en ce qu**'au moins un corps de refoulement (8) est agencé dans le canal de refroidissement, lequel corps de refoulement est pourvu d'une enveloppe fermée et ne s'étend que sur une zone partielle le long de l'axe longitudinal du canal de refroidissement (5), de sorte que dans la zone du ou des corps de refoulement (8) il résulte un espace annulaire ou tubulaire (10) entre le corps de refoulement (8) et la paroi du canal de refroidissement (5), l'espace annulaire ou tubulaire étant disponible pour le passage du fluide, ou au moins deux ou plusieurs sous-canaux (11) étant formés dans la zone du ou des corps de refoulement.

2. Aube selon la revendication 1,
**caractérisée**
**en ce que** l'au moins un corps de refoulement (8) est agencé dans la zone du centre axial et/ou radial du canal de refroidissement (8) le long de l'axe central du canal de refroidissement, en particulier coaxialement au canal de refroidissement (5).

3. Aube selon l'une des revendications précédentes,
**caractérisée**
**en ce que** la largeur de l'espace (10) entre le corps de refoulement (8) et la paroi du canal de refroidissement (5) ou le diamètre maximal d'un ou de chaque sous-canal (11) varie le long de l'axe longitudinal du canal de refroidissement ou est constant(e) au moins dans des zones partielles, de préférence sur toute la longueur du corps de refoulement (8) ou sur au moins 90 % de la longueur du corps de refoulement (8).

4. Aube selon l'une des revendications précédentes,
**caractérisée**
**en ce que** la largeur de l'espace (10) entre le corps de refoulement (8) et la paroi du canal de refroidissement (5) varie ou est constante le long de la circonférence du canal de refroidissement (5).

5. Aube selon l'une des revendications précédentes,
**caractérisée**
**en ce que** le corps de refoulement (8) réduit la section transversale d'écoulement du canal de refroidissement (5).

6. Aube selon l'une des revendications précédentes,
**caractérisée**
**en ce que** le corps de refoulement (8) comprend une structure en nid d'abeilles, de matrice ou de treillis.

7. Aube selon l'une des revendications précédentes,
**caractérisée**
**en ce que** dans la section transversale, une forme de la circonférence du canal de refroidissement (5) et/ou du sous-canal (11) et/ou du corps de refoulement (8) est choisie dans le groupe comprenant une forme ronde, circulaire, ovale, rectangulaire, carrée, hexagonale et toutes formes libres.

8. Aube selon l'une des revendications précédentes,
**caractérisée**
**en ce que** plusieurs sous-canaux (11) débouchent dans un canal de refroidissement commun et/ou comprennent une entrée de canal de refroidissement commune (6).

9. Aube selon l'une des revendications précédentes,
**caractérisée**
**en ce que** le ou les corps de refoulement (8) sont agencés dans le canal de refroidissement (5) de telle sorte que les sous-canaux (11) sont formés au moins avec une plus grande portion de surface du côté ou des côtés du canal de refroidissement qui sont plus proches d'une surface de l'aube que le côté sans ou avec une plus petite surface du sous-canal.

10. Aube selon l'une des revendications précédentes,
**caractérisée**
**en ce que** l'étendue longitudinale du canal de refroidissement (5) et/ou des sous-canaux (11) est supérieure au diamètre maximal du canal de refroidissement (5) ou d'un ou de chaque sous-canal (11).

11. Aube selon l'une des revendications précédentes,
**caractérisée**
**en ce que** le canal de refroidissement (5) s'étend en forme de méandre à travers l'aube.

12. Procédé de fabrication d'une aube d'une turbomachine selon l'une des revendications précédentes, dans lequel l'aube est fabriquée par un procédé additif.

13. Procédé selon la revendication 12,
**caractérisé**
**en ce que** le procédé additif est une fusion sélective par faisceau d'électrons ou par faisceau laser.
